# FASCICULE DE BREVET EUROPEEN

(11) **EP 2 408 194 B1**
(45) Date de publication et mention de la délivrance du brevet: **24.12.2014**
(21) Numéro de dépôt: 11354022.3
(22) Date de dépôt: 12.05.2011
(51) Int. Cl.: H04N 5/374

(54) **Capteur d'image en technologie CMOS à forte cadence vidéo**
Bilderfassungsgerät mit CMOS-Technologie mit einer starken Videofrequenz
Image sensor using CMOS technology with high video rate

(30) Priorité: 17.05.2010 FR 1002066; 03.06.2010 FR 1002360; 09.07.2010 FR 1002909
(43) Date de publication de la demande: 18.01.2012
(73) Titulaire: Commissariat à l'Énergie Atomique et aux Énergies Alternatives, 75015 Paris (FR)
(72) Inventeur: Cazaux, Yvon, 38100 Grenoble (FR); Giffard, Benoit, 38000 Grenoble (FR)
(74) Mandataire: Dubreu, Sandrine

(56) Documents cités:
- FR-A1- 2 906 080
- US-A1- 2007 012 865
- US-A1- 2009 295 971
- US-A1- 2010 046 853

## Description

### Domaine technique de l'invention

L'invention est relative à un capteur d'image linéaire destiné à saisir une image par balayage, notamment à un capteur à retard temporel et intégration, plus connu sous l'acronyme TDI (de l'anglais « Time Delay and Integration »).

### État de la technique

Les principes d'un capteur d'image TDI sont décrits, par exemple, dans l'article intitulé « A Large Area TDI Image Sensor for Low Light Level Imaging », par Michael G. Farrier et al - IEEE Journal of Solid-State Circuits, Vol. SC-15, No. 4, Août 1980.

Un capteur TDI est généralement utilisé pour saisir l'image d'un objet se déplaçant à vitesse élevée et observé sous de mauvaises conditions d'éclairage. Il est généralement réalisé en technologie CCD (de l'anglais « Charge-Coupled Device », ou dispositif à transfert de charges), qui a jusqu'à maintenant permis d'obtenir les meilleures performances en termes de sensibilité.

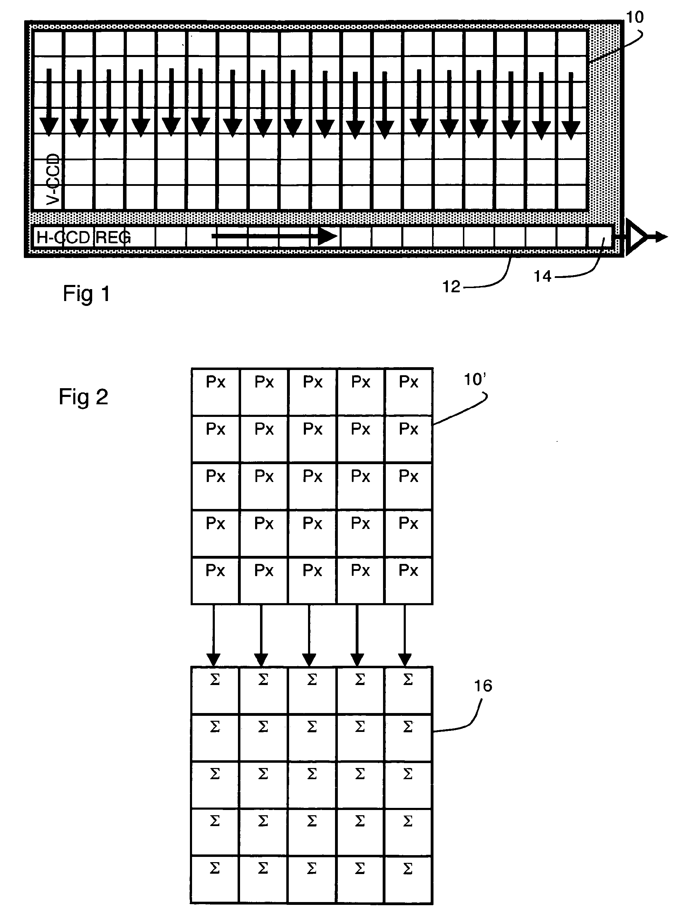

La figure 1 représente schématiquement un capteur TDI en technologie CCD, tel que décrit dans l'article susmentionné. Il comprend une matrice de sites photosensibles, ou photosites 10 dont les rangées sont généralement, comme cela est représenté, nettement plus longues que les colonnes. Dans l'exemple de l'article susmentionné, une rangée comporte 1028 photosites, tandis qu'une colonne en comporte seulement 128. Pour la photographie terrestre par satellite, une rangée peut comporter de l'ordre de 12000 photosites, et la matrice comporte quelques dizaines de rangées.

Les rangées de la matrice sont disposées perpendiculairement au déplacement de l'objet dont on veut saisir l'image. Le déplacement de cette image, relatif au capteur, est représenté par des flèches descendantes. Ces flèches correspondent également au déplacement des charges électriques dans les registres CCD, en synchronisme avec le déplacement de l'image.

Chaque rangée saisit une tranche correspondante de l'objet pendant un temps d'exposition compatible avec la vitesse de l'image. Cela provoque une accumulation de charges négatives (électrons) dans les photosites de la rangée.

Lorsqu'une tranche de l'image saisie par une rangée i s'est déplacée au niveau de la rangée i+1, les charges accumulées dans la rangée i sont transférées dans la rangée i+1, qui continue, pendant un nouveau temps d'exposition, à accumuler des charges pour la même tranche. Les transferts de charges d'une rangée à la suivante s'opèrent donc en synchronisme avec le déplacement de l'image.

La dernière rangée de la matrice contient ainsi, à chaque cycle de transfert, la somme des charges accumulées par toutes les rangées pour une même tranche. La sensibilité du capteur est donc, en théorie, multipliée par le nombre de rangées.

A la fin de chaque cycle de transfert de charges et d'exposition, les charges de la dernière rangée de la matrice sont transférées dans un registre à décalage 12 servant à la lecture des informations de la dernière rangée. Les charges stockées dans les photosites de ce registre sont décalées photosite par photosite vers un convertisseur charge-tension 14 en bout de rangée, où une tension correspondant à la charge totale de chaque photosite peut être prélevée par un circuit de traitement, généralement externe au capteur.

La technologie CCD étant de moins en moins utilisée pour les capteurs d'image, au profit de la technologie CMOS, l'utilisation de cette dernière technologie est envisagée pour les capteurs TDI.

L'article intitulé « Time-Delay-Integration Architectures in CMOS Image Sensors », par Gérald Lepage, Jan Bogaerts, et Guy Meynants - IEEE Transactions on Electron Devices, Vol. 56, NO. 11, novembre 2009, décrit des solutions pour obtenir la fonctionnalité TDI à l'aide d'un capteur d'image CMOS.

Dans un capteur d'image CMOS, la lumière est également captée sous forme de charges, au niveau de pixels. Par contre, chaque pixel étant muni de son propre circuit de lecture en tension, on ne peut pas transférer des charges d'un pixel à un autre.

La figure 2 représente schématiquement une architecture envisagée dans cet article de Lepage et al. À une matrice 10' de NxM pixels Px on associe une matrice 16 de cellules mémoire Σ, de même taille et configuration (ici NxM = 5x5).

Dans le principe, la matrice de pixels 10' prend des vues à une cadence correspondant au temps (appelé « temps ligne » T_{L}) que met une tranche d'image à balayer le pas des rangées de pixels. Ainsi, au bout de N temps ligne, la même tranche d'image aura été saisie par chacune des N rangées de la matrice de pixels. Chaque rangée de la mémoire 16 est associée temporairement à une même tranche de l'image. On y accumule les niveaux de luminosité enregistrés pour cette tranche par toutes les rangées de pixels. Une fois que tous les niveaux ont été accumulés pour la tranche, la rangée mémoire est lue, réinitialisée, et associée de manière circulaire à une nouvelle tranche d'image.

On s'aperçoit qu'on doit ainsi procéder à l'accumulation de toutes les rangées de la matrice de pixels à chaque temps ligne.

Alors qu'en technologie CCD les opérations d'accumulation de niveaux de luminosité correspondent à de simples transferts de charges, en technologie CMOS ces opérations sont notablement plus complexes. Elles impliquent des multiplexages sur des bus de lecture des pixels, des conversions analogique-numérique, des opérations d'addition, et des opérations d'accès mémoire. Il en résulte qu'on a des difficultés en technologie CMOS à tenir les mêmes cadences de prise de vue (ou temps ligne T_{L}) qu'en technologie CCD. Ainsi, la résolution en nombre de rangées de la matrice de pixels doit être adaptée au temps ligne minimal envisagé et au pas des pixels souhaité.

Dans certaines applications, comme cela est décrit notamment dans l'article susmentionné de Lepage et al., on souhaite subdiviser chaque pixel dans le sens du déplacement afin d'améliorer ce qu'on appelle la fonction de transfert de modulation (FTM) de filé, représentative de la netteté de l'image reproduite. Cela revient à augmenter le nombre de rangées de pixels tout en diminuant le pas pour conserver les dimensions du capteur. Les contraintes temporelles augmentent avec le carré du facteur de subdivision.

Pour passer d'une FTM de filé de 0,64 à 0,9, on subdivise chaque pixel en deux dans le sens du déplacement. Les contraintes temporelles sont alors multipliées par 4.

Par ailleurs, le document US2010/046853 décrit un capteur d'image TDI constitué d'une multitude de TDI partiels. Une même tranche d'image est balayée par chaque TDI partiel. Les images obtenues par les différents TDI partiels sont ensuite sommées pour améliorer le rapport signal sur bruit.

Le capteur d'image TDI comprend une matrice de pixels, selon une distribution en damier ou une distribution dans laquelle les rangées paires et impaires sont séparées dans la direction de balayage, un premier circuit de lecture pour les pixels de rang pair et un deuxième circuit de lecture pour les pixels de rang impair. Chaque rangée est connectée à son circuit de lecture par un bus de lecture.

### Résumé de l'invention

On constate qu'il existe un besoin de prévoir un capteur d'image de type TDI réalisé en technologie CMOS permettant de relâcher les contraintes temporelles, afin notamment de pouvoir améliorer la FTM de filé.

On tend à satisfaire ce besoin en prévoyant un capteur d'image CMOS à retard temporel et intégration comprenant une matrice de pixels photosensibles organisés en rangées et colonnes, un premier convertisseur analogique-numérique pour chaque colonne, connecté par un bus de colonne aux sorties de plusieurs pixels de la colonne, une première matrice de cellules mémoire connectée pour recevoir les sorties des premiers convertisseurs ; et un circuit de commande configuré pour organiser la lecture des pixels sur les bus de colonne et l'écriture des sorties des premiers convertisseurs dans la première matrice de cellules mémoire de manière à stocker dans une rangée de cellules mémoire les niveaux de luminosité accumulés de plusieurs rangées de pixels.

La première matrice de cellules mémoire est configurée avec le circuit de commande pour stocker dans ses rangées les niveaux de luminosité accumulés des rangées d'une première partie de la matrice de pixels.

Le capteur comprend en outre un deuxième convertisseur analogique-numérique pour chaque colonne, recevant par un bus de colonne les sorties des pixels de la colonne, appartenant à une deuxième partie de la matrice de pixels, distincte de la première partie. Une deuxième matrice de cellules mémoire est connectée pour recevoir les sorties des deuxièmes convertisseurs, le circuit de commande étant en outre configuré pour organiser le stockage dans une rangée de la deuxième matrice de cellules mémoire des niveaux de luminosité accumulés des rangées de la deuxième partie de la matrice de pixels. Un additionneur est prévu pour sommer les niveaux accumulés dans une rangée de la première matrice de cellules mémoire aux niveaux accumulés dans une rangée correspondante de la deuxième matrice de cellules mémoire.

Selon un mode de réalisation, les premiers et deuxièmes convertisseurs sont reliés aux pixels de la matrice par des bus de colonne distincts, et le circuit de commande est configuré pour organiser une lecture simultanée sur les bus de deux rangées appartenant respectivement aux première et deuxième parties de la matrice de pixels.

Selon une variante de réalisation, les premiers et deuxièmes convertisseurs sont reliés aux pixels de la matrice par des bus de colonne communs, et le circuit de commande est configuré pour organiser deux lectures successives sur les bus de deux rangées appartenant respectivement aux première et deuxième parties de la matrice de pixels, avec un différé correspondant au délai requis par les circuits d'échantillonnage desdits convertisseurs pour échantillonner les sorties des pixels reçus par le bus correspondant.

Selon un développement, les première et deuxième matrices de cellules mémoire sont disposées de part et d'autre de la matrice de pixels.

Afin d'améliorer la FTM de filé, on prévoit, dans chaque pixel d'une colonne excepté le dernier, un élément photosensible, un noeud de stockage, un premier transistor de transfert reliant l'élément photosensible au noeud de stockage et un deuxième transistor de transfert qui relie le noeud de stockage du pixel à l'élément photosensible du pixel suivant de la colonne, et qui est connecté pour être actif en même temps que le premier transistor de transfert.

Les différents modes de réalisation sont définis dans les revendications 1 et 2 ainsi que dans la revendication de type méthode 8.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1, précédemment décrite, représente schématiquement un capteur d'image TDI classique, réalisé en technologie CCD ;
- la figure 2, précédemment décrite, représente schématiquement un capteur TDI classique réalisé en technologie CMOS ;
- la figure 3 représente schématiquement un mode de réalisation de capteur TDI en technologie CMOS permettant de relâcher les contraintes temporelles ;
- la figure 4 représente un pixel de capteur CMOS à cinq transistors ;
- la figure 5 est un chronogramme illustrant une utilisation du pixel de la figure 4 dans le cadre du capteur de la figure 3 ;
- la figure 6 est un tableau représentant l'utilisation des mémoires de la figure 3 ;
- la figure 7 représente un autre mode de réalisation de capteur TDI en technologie CMOS ;
- la figure 8 représente un autre mode de réalisation de capteur TDI en technologie CMOS ;
- la figure 9 représente schématiquement un mode de réalisation de capteur TDI en technologie CMOS permettant d'améliorer la FTM de filé ;
- les figures 10a et 10b symbolisent un capteur du type de la figure 9 dans deux phases de mesure ; et
- la figure 11 est un chronogramme illustrant le fonctionnement d'un capteur du type de la figure 9.

### Description d'un mode de réalisation préféré de l'invention

Afin de relâcher les contraintes temporelles du fonctionnement d'un capteur TDI réalisé en technologie CMOS, on propose ici une solution permettant de diviser par deux le temps nécessaire aux opérations d'accumulation. En effet, un facteur important dans les contraintes temporelles est le temps nécessaire pour accumuler un niveau de luminosité courant avec une valeur stockée en mémoire.

On obtient cela en prévoyant, pour chaque colonne de pixels, deux voies d'accumulation indépendantes, chacune associée à une mémoire séparée, qu'on utilise de manière simultanée ou quasi-simultanée.

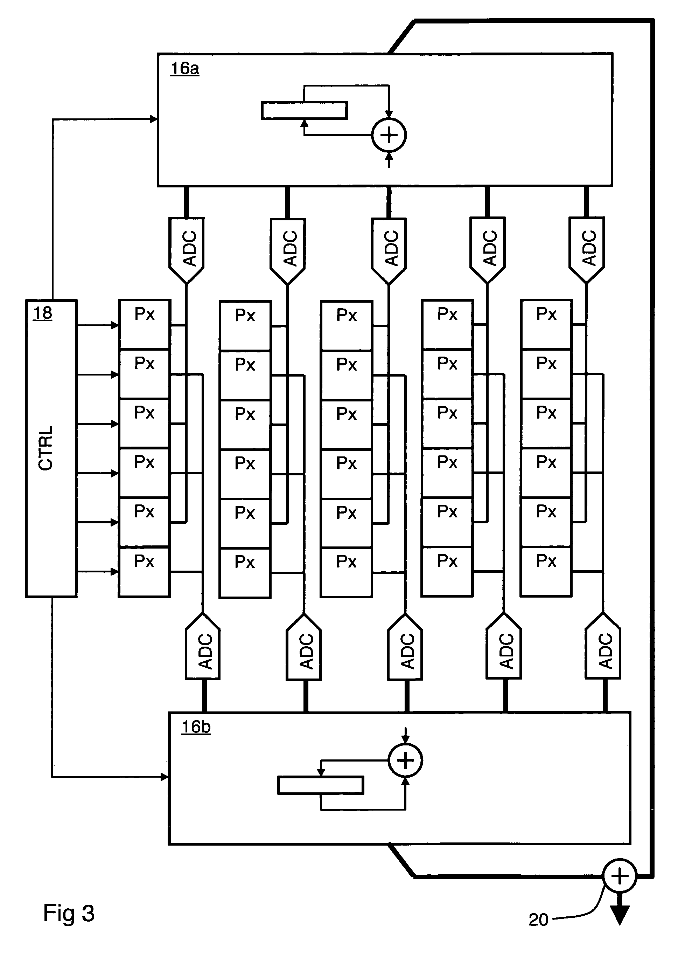

La figure 3 représente schématiquement un mode de réalisation d'architecture permettant de mettre cette solution en oeuvre. La matrice de pixels photosensibles Px est représentée avec six rangées et cinq colonnes, à titre d'exemple.

De façon générale, une mémoire d'accumulation 16a est associée à une première moitié des rangées, et une mémoire d'accumulation séparée 16b est associée à la deuxième moitié des rangées. On peut ainsi écrire dans la mémoire 16a une valeur correspondant à un pixel de la première moitié en même temps que l'on écrit dans la mémoire 16b une valeur correspondant à un pixel de la deuxième moitié.

Dans la figure 3, la mémoire d'accumulation 16a est associée aux rangées impaires de la matrice de pixels, et la mémoire d'accumulation 16b est associée aux rangées paires de la matrice de pixels. Les pixels de rang impair et les pixels de rang pair de chaque colonne sont ici reliés par des bus de lecture séparés à leurs mémoires respectives 16a et 16b. Dans chacun de ces bus, on prévoit un convertisseur analogique-numérique ADC. Ainsi, les niveaux analogiques fournis par les pixels sont convertis en numérique avant d'être accumulés dans les mémoires 16a et 16b.

Avec cette configuration, on peut écrire dans la mémoire 16a une valeur correspondant à un pixel impair en même temps que l'on écrit dans la mémoire 16b une valeur correspondant à un pixel pair.

L'accumulation a lieu, par exemple, comme cela est schématisé au niveau des mémoires, à l'aide d'un additionneur qui remplace le contenu d'une cellule mémoire par la somme de ce contenu et de la valeur fournie par le convertisseur ADC correspondant.

Les contenus des mémoires 16a et 16b sont accessibles par des bus respectifs parvenant aux deux entrées d'un d'additionneur 20. On prévoit en fait un additionneur 20 par colonne, servant à compléter les accumulations partielles faites dans chacune des mémoires 16a et 16b. L'additionneur peut être inclus dans le capteur d'image ou bien déporté dans un circuit extérieur (non représenté).

Les mémoires d'accumulation 16a et 16b et les pixels Px sont gérés par un circuit de commande 18, dont le fonctionnement sera décrit plus en détail ultérieurement.

Chacune des mémoires d'accumulation 16a et 16b a de préférence la même configuration que la matrice de pixels, c'est-à-dire qu'elle est sous la forme d'une matrice de cellules mémoire de six rangées par cinq colonnes dans l'exemple représenté. En outre, comme cela est représenté, les mémoires 16a et 16b sont de préférence disposées physiquement de part et d'autre de la matrice de pixels, dans le sens des colonnes. Cela facilite l'acheminement des connexions.

Par rapport à la configuration classique de la figure 2, on double la taille mémoire. Cela n'a pas une influence notable sur l'encombrement du capteur, car ce dernier comporte généralement beaucoup moins de rangées que de colonnes. Ainsi, on ajoute un nombre relativement faible de rangées de mémoire qui affectent peu la largeur du capteur par rapport aux autres composants du capteur, notamment les plots d'entrée/sortie.

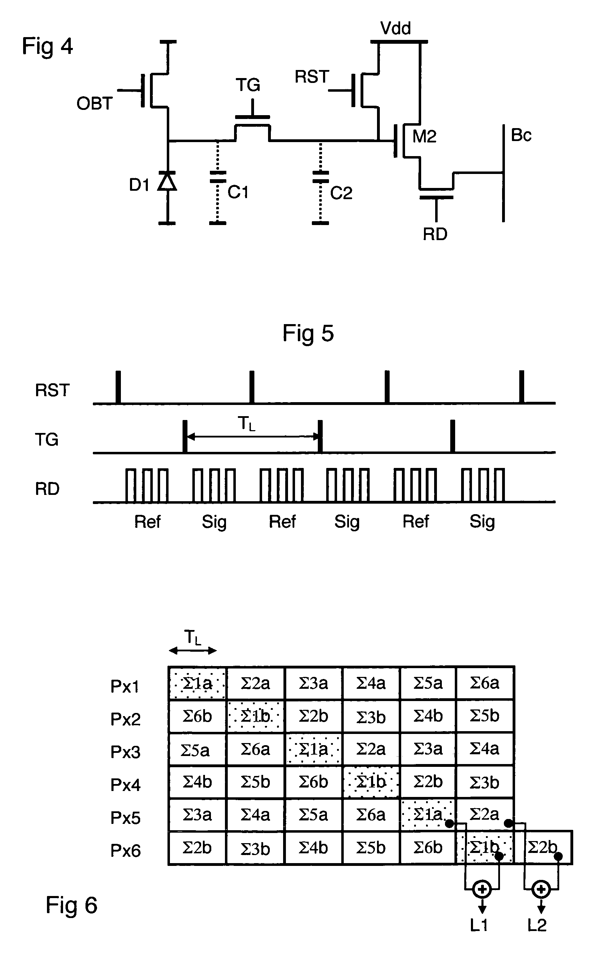

La figure 4 représente un type classique, dénommé « 5T », de pixel CMOS, que l'on pourra utiliser dans la matrice de pixels. Il comprend une photodiode D1, dont la capacité intrinsèque C1, ou capacité d'intégration, permet d'accumuler les charges générées par la lumière frappant le pixel. Un transistor de transfert TG relie la photodiode D1 à la grille d'un transistor suiveur M2. La capacité de grille du transistor M2 ainsi que les capacités des autres composants reliés à la grille du transistor M2 forment une capacité tampon C2. Un transistor de lecture (ou de sélection ligne) RD relie la source du transistor suiveur M2 à un bus de colonne Bc. Un transistor de réinitialisation RST relie la capacité C2 à une ligne d'alimentation positive Vdd. Un transistor d'obturateur et d'anti-éblouissement OBT relie la photodiode D1 à la ligne Vdd. Pour des raisons de commodité, les signaux de commande des transistors ont ci-après le même nom que les transistors.

Ce type de pixel permet de réaliser un capteur à obturateur global, c'est-à-dire un capteur permettant d'exposer tous ses pixels en même temps et de lire les niveaux des pixels successivement après exposition. Le fonctionnement est en bref le suivant. Initialement, le transistor OBT est conducteur, maintenant la capacité C1 à un niveau de réinitialisation. Le transistor OBT est bloqué lorsque commence une phase d'exposition. Les transistors TG, RST et RD sont également bloqués. La capacité C1 intègre les charges engendrées par la lumière frappant la photodiode D1. Avant la fin de l'exposition, le transistor RST est actionné brièvement pour réinitialiser la capacité tampon C2. En fin d'exposition, le transistor TG est actionné brièvement pour transférer les charges de la capacité C1 vers la capacité tampon C2. Le transistor OBT est actionné brièvement pour réinitialiser la capacité C1 pour une nouvelle phase d'exposition. Pendant chaque phase d'exposition, le niveau de tension correspondant à l'exposition précédente est stocké sur la capacité tampon C2. Ce niveau de tension peut être transféré à tout moment sur le bus Bc en actionnant le transistor de lecture RD, ceci avant la réinitialisation par le transistor RST.

Le transistor d'obturation OBT peut servir, outre à réinitialiser la capacité d'intégration C1, à définir, par son état bloqué, une fenêtre d'exposition réglable entre deux actionnements consécutifs du transistor de transfert TG. Une autre fonction de ce transistor est d'éviter le débordement de charges de la capacité C1 vers la capacité C2 pendant la phase d'intégration. Pour cela, le niveau de grille du transistor OBT est placé à une valeur inférieure à celle du transistor TG pour favoriser l'écoulement des charges en excès par le transistor OBT et préserver ainsi l'information précédente stockée dans la capacité C2.

La capacité C2, de valeur relativement faible pour minimiser le bruit de lecture, présente à sa réinitialisation un niveau de « noir » bruité, qui vient s'ajouter au niveau utile transféré depuis la capacité C1. Pour atténuer l'effet de ce bruit, on procède généralement à un double échantillonnage corrélé, c'est-à-dire qu'on échantillonne d'abord les niveaux de noir des pixels, pour les retrancher ensuite aux niveaux échantillonnés après transfert depuis la capacité C1.

Si l'on veut procéder à un double échantillonnage corrélé dans un capteur du type décrit ici, cela implique qu'il faut aussi lire les niveaux de noir des pixels pour les retrancher à chaque exposition aux valeurs accumulées dans les mémoires 16a et 16b. Cela contribue aux contraintes temporelles de ce type de capteur. Les valeurs des niveaux de noir sont retranchées directement dans la cellule mémoire d'accumulation correspondant à chaque pixel, l'additionneur étant dans ce cas utilisé alternativement en additionneur puis en soustracteur.

La figure 5 est un chronogramme illustrant plus en détail le fonctionnement du capteur de la figure 3, dans le cas où ses pixels sont de type 5T.

Des périodes d'exposition successives, correspondant généralement aux temps ligne T_{L}, sont définies entre des activations périodiques du transistor de transfert TG. Juste après chaque transfert TG, on active brièvement le transistor OBT pour réinitialiser la capacité d'intégration C1 et démarrer la période d'exposition suivante. Une réinitialisation RST de la capacité tampon C2 survient sensiblement à mi chemin entre deux transferts TG.

Entre chaque réinitialisation RST et le transfert TG suivant, on procède à la lecture des niveaux de noir de chaque pixel de la colonne. Comme les pixels pairs et les pixels impairs sont reliés à des mémoires d'accumulation indépendantes par des bus Bc indépendants, on peut lire les niveaux d'un pixel pair et d'un pixel impair simultanément. Ainsi, comme cela est représenté dans le cadre de l'exemple de colonnes de six pixels, on procède à trois lectures successives de couples de pixels au lieu de procéder, dans un capteur classique, à six lectures successives de pixels individuels.

Les niveaux de noir ainsi récupérés sont soustraits aux contenus des cellules mémoire correspondantes contenant les niveaux de luminosité accumulés.

Entre chaque transfert TG et la réinitialisation RST suivante, on procède à la lecture des niveaux utiles de chaque pixel de la colonne. Comme pour les niveaux de noir, les niveaux utiles des six pixels de la colonne sont lus en trois cycles et envoyés par couples aux mémoires d'accumulation respectives 16a et 16b.

L'ordre de lecture des pixels d'une colonne importe peu, puisque l'ordre de sommation n'affecte pas le résultat. Les niveaux à lire sont disponibles pendant toute une durée ligne T_{L} sur les capacités tampon C2.

Le chronogramme de la figure 5 a été décrit avec l'utilisation de pixels 5T. On peut néanmoins utiliser des pixels 4T dans le capteur. Dans un pixel 4T, on ne dispose pas du transistor OBT. Si le procédé de fabrication est de qualité suffisante, et que l'on n'a pas besoin des fonctions d'obturateur et d'anti-éblouissement du transistor OBT, la fonction de réinitialisation de la capacité d'intégration C1 peut être réalisée par le transistor TG. En effet, à chaque activation du transistor TG, la totalité des charges de la capacité C1 peut être transférée vers la capacité C2, provoquant la réinitialisation de la capacité C1 à l'état vide. La photodiode D1 est alors de type « verrouillé » (ou « pinned » en anglais).

La figure 6 est un tableau illustrant, pour une colonne de pixels Px1 à Px6, un exemple de gestion des cellules Σ correspondantes des mémoires 16a et 16b, organisée par le circuit de commande 18 pendant le fonctionnement du capteur de la figure 3. Les colonnes consécutives du tableau correspondent à des temps ligne T_{L} consécutifs. Les cellules de la mémoire 16a, correspondant aux pixels impairs, sont identifiées par le suffixe « a », tandis que les cellules de la mémoire 16b, correspondant aux pixels pairs, sont identifiées par le suffixe « b ». Les chiffres dans les cellules du tableau indiquent le rang de la cellule mémoire.

L'ordre d'utilisation des cellules importe peu. On suppose dans cet exemple que les niveaux aux temps ligne T_{L} successifs d'un même pixel Px sont accumulés dans des cellules de rang croissant. Ainsi, les niveaux successifs du pixel Px1 sont accumulés dans les cellules Σ1a à Σ6a, qui sont réutilisées ensuite de manière circulaire.

Par ailleurs, on cherche à accumuler, à chaque temps ligne, dans une même cellule mémoire, le niveau du pixel suivant de la colonne, ceci jusqu'à avoir accumulé dans la même cellule les niveaux de tous les pixels de la colonne à des temps ligne successifs. Cette volonté est exprimée par les cellules en grisé du tableau, en partant du premier pixel Px1 au premier temps ligne. Ainsi, du premier au sixième temps ligne, on accumule successivement les niveaux des pixels Px1 à Px6 dans une cellule Σ1. En réalité, du fait que les pixels pairs et impairs sont associés à des mémoires distinctes, les niveaux des pixels impairs sont accumulés dans une même cellule Σ1a, tandis que les niveaux des pixels pairs sont accumulés dans une même cellule Σ1b. A la fin du sixième temps ligne, les cellules Σ1a et Σ1b ont chacune accumulé les niveaux d'une demi-colonne de pixels. A ce moment-là, comme cela est illustré, on somme les contenus des cellules Σ1a et Σ1b pour fournir le niveau accumulé de la colonne complète. Ce niveau correspond à un pixel d'une ligne L1 de l'image finale.

De manière similaire, en partant du deuxième temps ligne, les niveaux des pixels de la colonne sont accumulés dans les cellules Σ2a et Σ2b, dont les contenus sont sommés au septième temps ligne pour former une nouvelle ligne L2 de l'image finale.

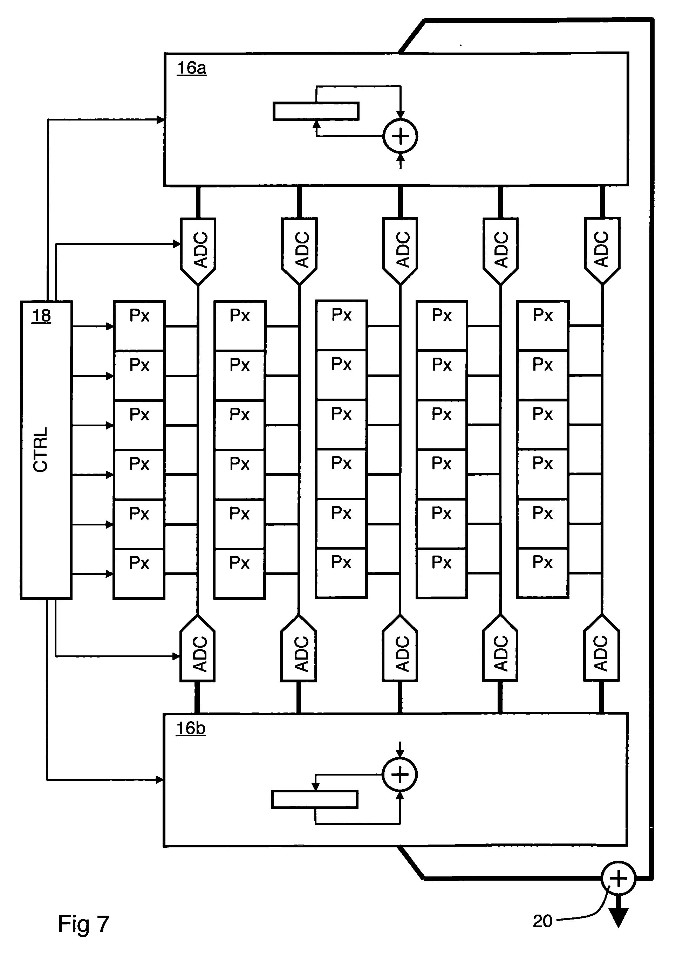

La figure 7 représente une variante du capteur de la figure 3. Au lieu de prévoir des bus de colonne séparés pour les pixels pairs et impairs d'une colonne, on prévoit un bus de colonne unique relié aux deux mémoires 16a et 16b. Ainsi, chaque bus de colonne est relié à deux convertisseurs ADC, l'un pour la mémoire 16a, l'autre pour la mémoire 16b.

Cette configuration a l'avantage de ne pas nécessiter des d'interconnexions enchevêtrées entre les colonnes, mais elle ne permet pas de transmettre en parfaite simultanéité un niveau de pixel impair et un niveau de pixel pair aux mémoires 16a et 16b. On peut néanmoins effectuer les transferts des pixels vers les bus de lecture quasi-simultanément.

Pour cela, on procède aux transferts des pixels impairs et pairs avec un léger différé correspondant au délai requis par les circuits d'échantillonnage ou convertisseurs ADC disposés aux extrémités de colonnes. Ce délai d'échantillonnage est petit devant le temps requis pour la conversion et l'accumulation. Plus précisément, on commence par activer en lecture un pixel impair (par exemple) et l'échantillonnage du convertisseur ADC impair correspondant. Dès que le délai d'échantillonnage est écoulé, on désactive l'échantillonnage du convertisseur impair et la lecture du pixel impair, et on active la lecture d'un pixel pair et l'échantillonnage du convertisseur ADC pair correspondant. Ensuite on attend le temps nécessaire à la conversion et à l'accumulation avant de procéder de manière similaire avec deux nouveaux pixels impair et pair.

Par rapport à la solution de la figure 3, on ajoute N/2 délais d'échantillonnage. Le temps de traitement d'une colonne reste toutefois nettement inférieur au temps requis dans les solutions classiques pour effectuer N transferts consécutifs.

Jusqu'à maintenant, on a décrit des solutions où les lectures simultanées (ou quasi-simultanées) portent sur des couples de pixels pair et impair. Comme l'ordre de lecture des rangées pendant un temps ligne importe peu, les rangs des pixels que l'on lit en simultané peuvent être quelconques.

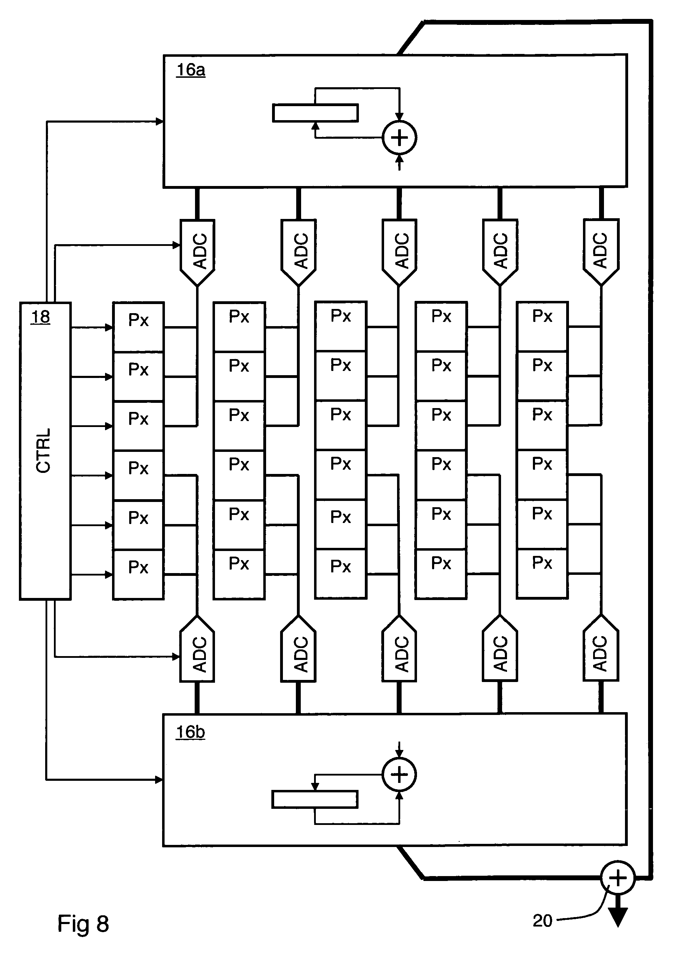

La figure 8 représente une autre variante du capteur de la figure 3, où les pixels que l'on lit en simultané sont choisis selon un autre schéma. La mémoire d'accumulation 16a est ici associée aux rangées de la moitié supérieure de la matrice de pixels, et la mémoire d'accumulation 16b est associée aux rangées de la moitié inférieure de la matrice de pixels. Les pixels de la moitié supérieure et les pixels de la moitié inférieure de chaque colonne sont reliés par des bus de lecture séparés à leurs mémoires respectives 16a et 16b.

Avec cette configuration, on peut écrire dans la mémoire 16a une valeur correspondant à un pixel de la moitié supérieure de la matrice de pixels en même temps que l'on écrit dans la mémoire 16b une valeur correspondant à un pixel de la moitié inférieure de la matrice de pixels.

Cette solution a l'avantage, par rapport à la structure de la figure 3, de ne pas nécessiter des interconnexions enchevêtrées entre les colonnes, tout en évitant le délai d'échantillonnage requis pour lire le deuxième pixel de chaque couple dans la structure de la figure 7.

L'architecture de la matrice de capteur fonctionnant en mode TDI peut ainsi comporter deux fois plus de lignes intégrant deux fois moins longtemps ; donc avec une durée ligne deux fois plus courte ; afin de minimiser l'effet de filé lié au déplacement de l'image sur le circuit détecteur. Cette architecture avec suréchantillonnage spatial permet d'approcher les performances en FTM de filé naturellement obtenues avec les détecteurs réalisés en technologie CCD.

On a décrit jusqu'à maintenant des solutions permettant, à l'aide de deux mémoires indépendantes, de diviser par deux le temps de traitement d'une colonne de pixels. Bien entendu, on comprendra aisément qu'on peut diviser par K le temps de traitement en prévoyant K mémoires indépendantes.

Dans un mode de réalisation préférentiel, on augmente la FTM de filé en subdivisant chaque pixel en deux (voire plus), comme cela a déjà été proposé précédemment, mais en prévoyant en outre une architecture particulière de matrice de pixels limitant l'augmentation des contraintes temporelles à la valeur du facteur de subdivision, au lieu de les augmenter avec le carré du facteur de subdivision. Ainsi, en subdivisant chaque pixel en deux, les contraintes temporelles augmentent d'un facteur 2 seulement, au lieu de 4.

On obtient cela en augmentant la résolution temporelle du capteur sans augmenter sa résolution spatiale. Par « résolution temporelle », on entend le nombre de mesures prises par unité de temps, tandis que par « résolution spatiale », on entend le nombre de mesures prises par unité de distance. Le fait d'augmenter la résolution temporelle permet d'améliorer la FTM de filé, tandis que le fait de conserver la résolution spatiale permet de limiter les ressources nécessaires à traiter l'image. La résolution temporelle est augmentée en subdivisant chaque pixel, dans le sens du déplacement, en plusieurs sous-pixels couvrant la même surface que le pixel. La résolution spatiale est conservée en agrégeant en une seule valeur les valeurs d'un groupe glissant de sous-pixels consécutifs correspondant à la taille d'un pixel. Ce groupe « glisse » à la vitesse de déplacement de l'image, c'est-à-dire qu'il se décale d'un pixel en un temps ligne. Afin d'effectivement augmenter la résolution temporelle, une nouvelle agrégation a lieu à chaque fois que le groupe s'est décalé d'un sous-pixel.

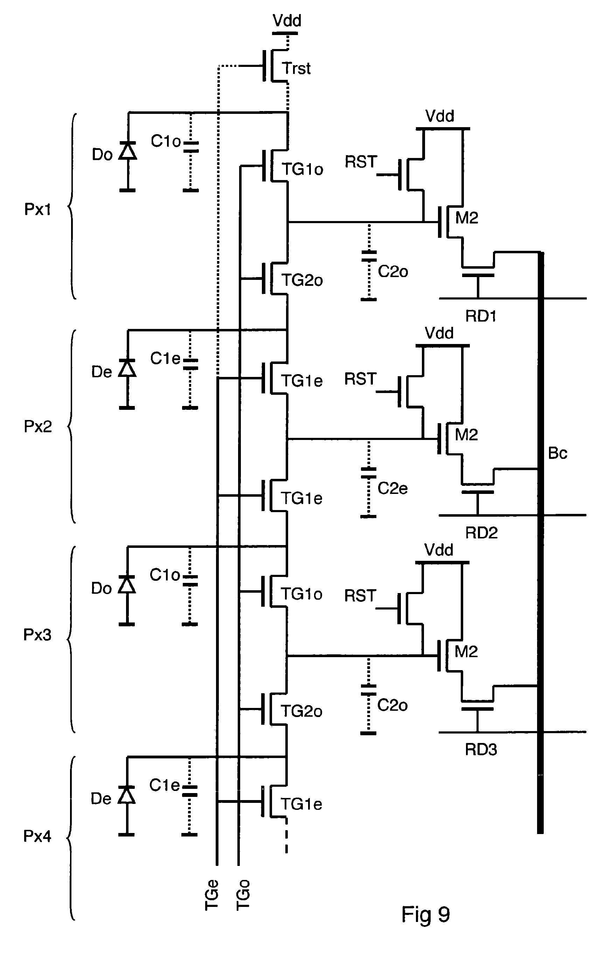

La figure 9 représente schématiquement les premiers pixels d'une colonne d'un capteur TDI en technologie CMOS permettant de mettre en oeuvre ce principe. Ce capteur est à obturateur global, c'est-à-dire que tous les pixels du capteur réalisent une intégration en même temps.

Dans les modes de réalisation de capteur décrits ci-après à titre d'exemple, on subdivise chaque pixel en deux dans le sens du déplacement pour passer d'une FTM de filé de 0,64 à 0,9.

Chaque pixel Px comprend, comme un pixel classique de type « 4T », une photodiode D et sa capacité d'intégration C1, un transistor de transfert TG1, un transistor suiveur M2 et un transistor de lecture RD. La capacité de grille du transistor M2 ainsi que les capacités des autres composants reliés à la grille du transistor M2 forment une capacité tampon C2, ou noeud de stockage. Les transistors de lecture RD des pixels d'une rangée sont commandés par une ligne de sélection commune à la rangée. Un transistor de réinitialisation RST relie la capacité C2 à une ligne d'alimentation positive Vdd.

Pour des raisons de commodité, les signaux de commande des transistors ont ci-après le même nom que les transistors. En outre, les références de certains éléments des pixels impairs ont un suffixe « o », tandis que les références des mêmes éléments des pixels pairs ont un suffixe « e ».

Chaque pixel de la figure 9 comprend en outre un transistor de transfert supplémentaire TG2, reliant la capacité C2 du pixel à la photodiode D du pixel suivant de la colonne. (Le dernier pixel de la colonne sera dépourvu d'un tel transistor de transfert supplémentaire.) Les transistors de transfert TG1 et TG2 d'un même pixel sont commandés en synchronisme - leurs grilles reçoivent pour cela un même signal de commande. De préférence, les deux transistors de transfert TG1o et TG2o de tous les pixels impairs sont commandés en synchronisme par une ligne unique TGo, tandis que les deux transistors de transfert TG1e et TG2e de tous les pixels pairs sont commandés en synchronisme par une ligne unique TGe.

On peut souhaiter que le premier pixel Px1 de la colonne se comporte exactement comme les autres pixels. Pour cela, on prévoit par exemple un transistor de réinitialisation Trst relié entre la photodiode du pixel Px1 et la ligne Vdd. Ce transistor Trst est activé par la ligne TGe de commande des transistors de transfert des pixels pairs. Ainsi, la capacité C1 du pixel Px1, dont le charge n'est pas transférable dans une capacité C2 d'un pixel précédent, est réinitialisée au moment où on commande les transistors de transfert des pixels pairs.

Par ailleurs, le dernier pixel de la colonne est un pixel classique - il ne comprend pas de deuxième transistor de transfert TG2, puisqu'il n'y a pas de pixel suivant auquel connecter ce transistor.

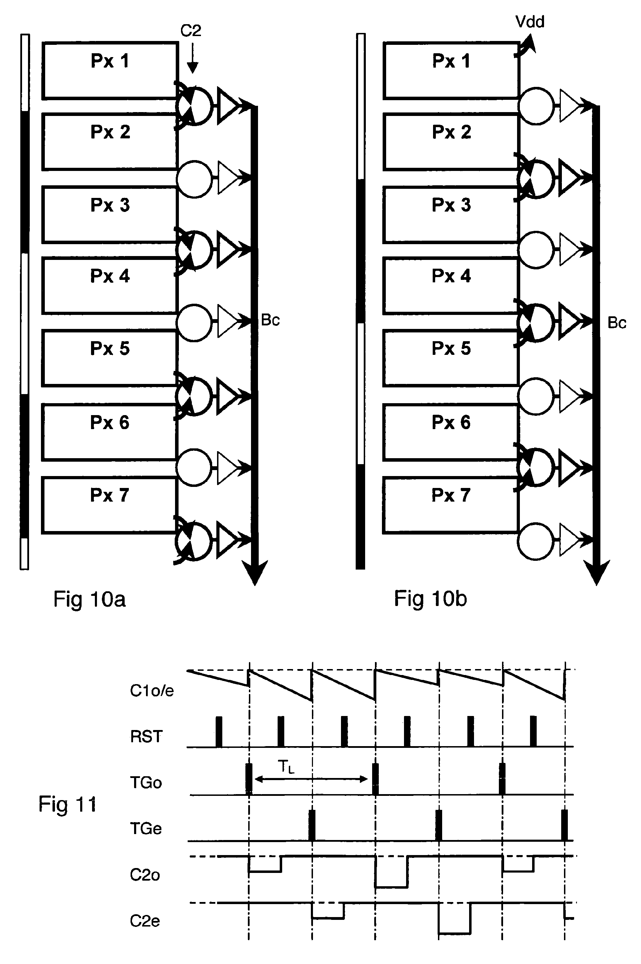

Les figures 10a et 10b représentent une colonne de pixels du type de la figure 9 à deux phases de fonctionnement du capteur. La colonne est parallèle au déplacement de l'image. Les cercles représentent les capacités C2 et les triangles les circuits de lecture (transistors M2 et RD).

Le cas représenté correspond à celui où la résolution temporelle est divisée par deux. Ainsi, chaque pixel représenté est en fait un sous-pixel, et deux sous-pixels consécutifs de la colonne, que l'on désignera « paire de pixels », forment un seul pixel à la résolution spatiale d'origine. Comme cela est représenté, une paire de pixels occupe de préférence une surface carrée, et chaque pixel est deux fois plus large que haut, afin que le facteur de forme d'origine soit conservé.

En face de la colonne, sous la forme d'une barre verticale, on a représenté une image de référence, ou mire, défilant du haut vers le bas. La mire comprend une alternance de tranches claires et de tranches sombres au pas des paires de pixels, c'est-à-dire à la limite de Nyquist pour la résolution spatiale d'origine. Chaque tranche est ainsi de la hauteur d'une paire de pixels et balaye la paire de pixels en un temps ligne T_{L}.

A la figure 10a, la première tranche sombre de la mire a défilé devant les deux premiers pixels Px1 et Px2 de la colonne, tandis que la première tranche claire a défilé devant les deux pixels suivants Px3 et Px4 de la colonne. Cette configuration est répétée le long de la colonne.

Comme cela est représenté par des flèches, on active les deux transistors de transfert de chacun des pixels impairs, d'où il résulte que les charges intégrées par les photodiodes des pixels Px1 et Px2, tous deux ayant vu la première tranche sombre de la mire, sont sommées dans la première capacité C2, tandis que les charges intégrées par les photodiodes des pixels Px3 et Px4, tous deux ayant vu la première tranche claire de la mire, sont sommées dans la troisième capacité C2. Cette configuration se répète le long de la colonne, de sorte que chaque capacité C2 de rang impair, c'est-à-dire chaque capacité C2o, reçoit la somme des charges de la paire de pixels voisins.

Les niveaux de tension des capacités C2o seront lus à tour de rôle sur le bus de colonne Bc pendant le demi temps ligne suivant, au cours duquel commence une nouvelle intégration sur les photodiodes.

A la figure 10b, correspondant à un demi temps ligne plus tard, la première tranche sombre de la mire s'est décalée d'un pixel vers le bas et a balayé les pixels Px2 et Px3, tandis que la première tranche claire a balayé les deux pixels suivants Px4 et Px5. Cette configuration est répétée le long de la colonne.

Comme cela est représenté par des flèches, on active les deux transistors de transfert de chacun des pixels pairs, d'où il résulte que les charges intégrées par les photodiodes des pixels Px2 et Px3, tous deux ayant vu la première tranche sombre de la mire, sont sommées dans la deuxième capacité C2, tandis que les charges intégrées par les photodiodes des pixels Px4 et Px5, tous deux ayant vu la première tranche claire de la mire, sont sommées dans la quatrième capacité C2. Cette configuration se répète le long de la colonne, de sorte que chaque capacité C2 de rang pair, c'est-à-dire chaque capacité C2e, reçoit la somme des charges de la paire de pixels voisins.

Les niveaux de tension des capacités C2e seront lus à tour de rôle sur le bus de colonne Bc pendant le demi temps ligne suivant. Les niveaux de tension des capacités impaires C2o auront été lus pendant le demi temps ligne en cours.

On s'aperçoit qu'on parvient ainsi à échantillonner une même tranche d'image tous les demi temps ligne, c'est-à-dire qu'on atteint une résolution temporelle deux fois meilleure, en utilisant à chaque échantillonnage une paire de pixels dont les informations sont agrégées, c'est-à-dire qu'on n'augmente pas la résolution spatiale.

Il en résulte, comme on peut le constater à l'aide des figures 10a et 10b, que le nombre de niveaux à lire sur le bus pendant un temps ligne est proportionnel au facteur de subdivision, au lieu d'être proportionnel au carré du facteur de subdivision. Si les niveaux des pixels devaient être lus individuellement sur le bus Bc, on aurait deux fois plus de lectures à faire pour chacune des figures 10a et 10b, c'est-à-dire à chaque demi temps ligne.

La figure 11 est un chronogramme illustrant un exemple d'évolution des principaux signaux relatifs aux pixels Px1 et Px2 au cours des phases des figures 10a et 10b, et de phases ultérieures. Le chronogramme est subdivisé, par des traits mixtes verticaux, en des périodes égales à un demi temps ligne.

Le premier signal est représentatif de la moyenne des états de charge des capacités C1 des pixels Px1 et Px2. On remarquera qu'un niveau de charge nul des capacités C1 et C2 correspond à un potentiel haut (par exemple Vdd), tandis qu'un niveau de charge croissant, correspondant à un nombre d'électrons croissant, évolue en décroissant à partir du potentiel haut.

Au cours du premier demi temps ligne, correspondant à la figure 10a, le pixel Px1 voit une transition de la tranche sombre à une tranche claire et le pixel Px2 voit la tranche sombre pendant tout le demi temps ligne. Les capacités C1 des pixels Px1 et Px2 se chargent à des niveaux faibles.

Avant la fin du premier demi temps ligne, le signal RST est activé pour réinitialiser les capacités C2. Une telle réinitialisation se répète avec une période d'un temps ligne ou, de préférence, d'un demi temps ligne, comme cela est représenté.

L'activation du signal RST peut survenir à tout instant à l'intérieur d'un demi temps ligne. De préférence, on l'active, comme cela est représenté, vers le milieu de chaque demi temps ligne, ce qui permettra d'effectuer un double échantillonnage corrélé pour compenser le bruit du niveau de noir. Ainsi, entre l'activation du signal RST et la fin du demi temps ligne, on transfère les niveaux de noir des capacités C2 sur le bus Bc, de sorte à pouvoir retrancher ces niveaux aux niveaux utiles transférés à la phase suivante.

A la fin du premier demi temps ligne, on active les couples de transistors de transfert TGo des pixels impairs. Les charges des capacités C1 des pixels Px1 et Px2 sont transférées et sommées dans la capacité C2o du pixel Px1, dont le niveau de tension présente un échelon d'amplitude correspondante (faible ici).

Les transistors TGo sont par la suite activés périodiquement avec une période d'un temps ligne.

Au cours du deuxième demi temps ligne, correspondant à la figure 10b, les capacités C1 des pixels Px2 et Px3 voient ce qu'avaient vu les pixels Px1 et Px2 au demi temps ligne précédent. Les capacités C1 des ces pixels (niveau non représenté pour le pixel Px3) se chargent à des niveaux faibles. Le pixel Px1 voyant pendant toute cette durée une tranche claire, sa capacité C1 se charge à un niveau élevé.

A la fin du deuxième demi temps ligne, on active les couples de transistors de transfert TGe des pixels pairs. Les charges des capacités C1 des pixels Px2 et Px3 sont sommées dans la capacité C2e du pixel Px2, dont le niveau de tension présente un échelon d'amplitude correspondante (de nouveau faible).

Les transistors TGe sont par la suite activés périodiquement avec une période d'un temps ligne.

Au cours du troisième demi temps ligne, les capacités C1 des pixels Px1 et Px2 qui voient défiler une tranche claire, se chargent à des niveaux élevés.

A la fin du troisième demi temps ligne, on active de nouveau les couples de transistors de transfert TGo des pixels impairs. Les charges des capacités C1 des pixels Px1 et Px2 sont sommées dans la capacité C2o du pixel Px1, dont le niveau de tension présente un échelon d'amplitude correspondante (élevée cette fois).

Les demi temps ligne se succèdent ainsi de manière similaire. On s'aperçoit que les niveaux sur les capacités C2 présentent une variation sensible périodique avec une période d'un temps ligne, correspondant au pas du motif de la mire.

En augmentant ainsi la résolution temporelle d'un facteur 2, sans affecter la résolution spatiale, on fait passer la FTM de filé de 0,64 à 0,9.

Le principe décrit est valable pour un facteur de subdivision N quelconque, bien que des facteurs supérieurs à 2 ne permettent pas d'améliorer de manière notable la FTM de filé (on obtient 0,955 pour un facteur 3, et 0,975 pour un facteur 4).

Pour augmenter la résolution temporelle d'un facteur N, qui augmentera les contraintes temporelles d'un facteur N également (au lieu de N²), chaque pixel de la figure 9 comprend un transistor de transfert TG1 reliant la photodiode D à la capacité de stockage C2 du pixel, et N-1 transistors de transfert supplémentaires (TG2, TG3... TGN) reliant la capacité de stockage C2 aux photodiodes respectives des N-1 pixels suivants. Ces N transistors de transfert du pixel sont activables en même temps pour sommer dans la capacité de stockage C2 du pixel les charges des N photodiodes du N-uplet de pixels ainsi formé. On prévoit un bus de N lignes de commande des transistors de transfert, la ligne de rang i étant activée à un temps iT_{L}/N de chaque temps ligne, et commandant les transistors de transfert des pixels de rangs i + kN, où k = 0, 1, 2,...

Le mode de réalisation de la figure 9, combiné aux deux mémoires séparées des figures 3, 7 ou 8, permet d'améliorer notablement la FTM de filé sans augmenter les contraintes temporelles. En effet, celles-ci sont multipliées par deux à cause du suréchantilonnage temporel mais divisées par deux grâce aux deux voies d'accumulation indépendantes.

## Revendications

1. Capteur d'image CMOS à retard temporel et intégration comprenant :
• une matrice de pixels photosensibles (Px) organisés en rangées et colonnes ;
• une première matrice (16a, 16b) de cellules mémoire ; et
• un circuit de commande (18) configuré pour organiser l'écriture et le stockage dans une rangée de la première matrice de cellules mémoire des niveaux de luminosité accumulés des rangées d'une première partie de la matrice de pixels et relatifs à une même tranche d'image,
• un additionneur (20) connecté pour sommer les niveaux accumulés dans ladite rangée de la première matrice de cellules mémoire ;
• un premier convertisseur analogique-numérique (ADC) pour chaque colonne de pixels dont la sortie est connectée à la première matrice (16a) de cellules mémoire, le premier convertisseur analogique-numérique (ADC) étant connecté pour recevoir par un premier bus de colonne les sorties des pixels de la colonne appartenant à la première partie de la matrice de pixels ;
**caractérisé en ce que** le capteur comporte une deuxième matrice (16b) de cellules mémoire,
**en ce que** le circuit de commande (18) est en outre configuré pour organiser l'écriture et le stockage dans une rangée de la deuxième matrice (16b) de cellules mémoire, des niveaux de luminosité accumulés des rangées d'une deuxième partie de la matrice de pixels et relatifs à la même tranche d'image, la deuxième partie étant distincte de la première partie,
l'additionneur (20) étant connecté pour sommer les niveaux accumulés dans ladite rangée de la première matrice de cellules mémoire aux niveaux accumulés dans ladite rangée correspondante de la deuxième matrice de cellules mémoire ;
**en ce que** le capteur comprend, pour chaque colonne de pixels, un deuxième convertisseur analogique-numérique (ADC) dont la sortie est connectée à la deuxième matrice (16b) de cellules mémoire, le deuxième convertisseur analogique-numérique (ADC) étant connecté pour recevoir par un deuxième bus de colonne, distinct du premier bus de colonne, les sorties des pixels de la colonne appartenant à la deuxième partie de la matrice de pixels,
et **en ce que** le circuit de commande est en outre configuré pour organiser une lecture simultanée sur les bus de deux rangées appartenant respectivement aux première et deuxième parties de la matrice de pixels.

2. Capteur d'image CMOS à retard temporel et intégration comprenant :
• une matrice de pixels photosensibles (Px) organisés en rangées et colonnes ;
• une première matrice (16a) de cellules mémoire ; et
• un circuit de commande (18) configuré pour organiser le stockage dans une rangée de la première matrice de cellules mémoire des niveaux de luminosité accumulés des rangées d'une première partie de la matrice de pixels et relatifs à une même tranche d'image,
• un additionneur (20) connecté pour sommer les niveaux accumulés dans ladite rangée de la première matrice de cellules mémoire,
• un premier convertisseur analogique-numérique (ADC) pour chaque colonne de pixels dont la sortie est connectée à la première matrice (16a) de cellules mémoire, le premier convertisseur analogique-numérique (ADC) étant connecté pour recevoir par un bus de colonne les sorties des pixels de la colonne appartenant à la première partie de la matrice de pixels ;
caractérisé en le capteur comporte une deuxième matrice (16b) de cellules mémoire, en ce que le circuit de commande (18) est en outre configuré pour organiser le stockage dans une rangée de la deuxième matrice de cellules mémoire, des niveaux de luminosité accumulés des rangées d'une deuxième partie de la matrice de pixels et relatifs à la même tranche d'image, la deuxième partie étant distincte de la première partie ;
l'additionneur (20) étant connecté pour sommer les niveaux accumulés dans ladite rangée de la première matrice de cellules mémoire aux niveaux accumulés dans ladite rangée correspondante de la deuxième matrice de cellules mémoire ;
en ce que le capteur comprend, pour chaque colonne de pixels, un deuxième convertisseur analogique-numérique (ADC) dont la sortie est connectée à la deuxième matrice (16b) de cellules mémoire, le deuxième convertisseur analogique-numérique (ADC) étant connecté pour recevoir par le même bus de colonne les sorties des pixels de la colonne appartenant à la deuxième partie de la matrice de pixels,
et en ce que le circuit de commande est en outre configuré pour organiser deux lectures successives sur le bus de deux rangées appartenant respectivement aux première et deuxième parties de la matrice de pixels, avec un différé correspondant au délai requis par les circuits d'échantillonnage desdits convertisseurs pour échantillonner les sorties des pixels reçus par le bus correspondant.

3. Capteur d'image selon l'une des revendications 1 et 2, dans lequel les première (16a) et deuxième (16b) matrices de cellules mémoire sont disposées de part et d'autre de la matrice de pixels (Px).

4. Capteur d'image selon l'une des revendications 1 et 2, dans lequel le circuit de commande est configuré pour commander les pixels de manière que les pixels soient exposés simultanément et lus séquentiellement par rangées vers les matrices de cellules mémoire.

5. Capteur d'image selon la revendication 4, dans lequel le circuit de commande est configuré pour opérer un double échantillonnage corrélé des pixels.

6. Capteur d'image selon l'une des revendications 1 et 2, dans lequel chaque pixel (Px1) d'une colonne, excepté le dernier, comprend :
• un élément photosensible (Do) ;
• un noeud de stockage (C2o) ; et
• un premier transistor de transfert (trio) reliant l'élément photosensible au noeud de stockage ;
• un deuxième transistor de transfert (TG2o) qui relie le noeud de stockage (C2o) du pixel à l'élément photosensible (De) du pixel suivant (Px2) de la colonne, et qui est connecté pour être actif en même temps que le premier transistor de transfert.

7. Capteur d'image selon la revendication 6, dans lequel, en fonctionnement, les premier et deuxième transistors de transfert (TGo) de chaque pixel de rang impair (Px1) sont activés à une première position temporelle d'un temps ligne récurrent, et les premier et deuxième transistors de transfert (TGe) de chaque pixel de rang pair (Px2) sont activés à une deuxième position temporelle, différente de la première, du temps ligne.

8. Procédé de gestion d'un capteur d'image CMOS à retard temporel et intégration comprenant les étapes suivantes :
• lire des niveaux de luminosité de plusieurs rangées d'une matrice de pixels photosensibles (Px) ; et
• accumuler les niveaux de luminosité dans une rangée d'une première matrice (16a) de cellules mémoire, ladite première matrice (16a) étant connectée à un premier convertisseur analogique-numérique (ADC) ;
**caractérisé en ce qu'**il comprend les étapes suivantes :
• lire successivement les niveaux de luminosité, relatifs à une même tranche d'image, des rangées d'une première partie de la matrice de pixels pour les accumuler dans une rangée correspondante de la première matrice (16a) de cellules mémoire ;
• lire successivement les niveaux de luminosité, relatifs à la même tranche d'image, des rangées d'une deuxième partie, distincte de la première partie, de la matrice de pixels pour les accumuler dans une rangée correspondante d'une deuxième matrice (16b) de cellules mémoire, ladite deuxième matrice (16b) étant connectée à un deuxième convertisseur analogique-numérique (ADC) ;
• opérer simultanément pour lire les niveaux d'une rangée appartenant à la première partie de la matrice de pixels et d'une rangée appartenant à la deuxième partie de la matrice de pixels quand le premier convertisseur analogique-numérique est connecté aux pixels de la première partie de la matrice par un premier bus et le deuxième convertisseur analogique-numérique est connecté aux pixels de la deuxième partie de la matrice par un deuxième bus distinct du premier, ou quasi-simultanément avec un décalage correspondant au délai requis par les circuits d'échantillonnage desdits convertisseurs pour échantillonner les sorties des pixels des première et deuxième parties de la matrice de pixels quand le premier convertisseur et le deuxième convertisseur sont connectés aux pixels de la première partie de la matrice et de la deuxième partie de la matrice par un même bus ; et
• additionner (20) les niveaux accumulés dans la rangée de la première matrice de cellules mémoire aux niveaux accumulés dans la rangée correspondante de la deuxième matrice de cellules mémoire.

9. Procédé selon la revendication 8, comprenant les étapes suivantes :
• lire les niveaux de noir des pixels avant chaque lecture des niveaux de luminosité des pixels ; et
• soustraire les niveaux de noir aux niveaux accumulés dans les rangées des matrices de cellules mémoire.

10. Procédé selon la revendication 8, comprenant les étapes suivantes :
• définir un groupe de plusieurs pixels consécutifs dans une colonne de la matrice de pixels photosensibles (Px) ;
• exposer le groupe de pixels ;
• agréger les informations des pixels du groupe ;
• décaler le groupe de pixels d'un pixel ; et
• répéter à partir de l'étape d'exposition.

## Patentansprüche

1. Zeitverzögendes und integrierendes CMOS-Bilderfassungsgerät, mit:
• einer Matrix aus lichtempfindlichen Pixeln (Px), die in Reihen und Spalten geordnet sind;
• einer ersten Speicherzellenmatrix (16a,16b); und
• einem Steuerkreis (18), der so ausgeführt ist, dass er das Schreiben und die Speicherung in einer Reihe der ersten Speicherzellenmatrix ordnet, von Helligkeitsniveaus, welche von den Reihen eines ersten Teils der Pixelmatrix akkumuliert werden und sich auf den gleichen Bildabschnitt beziehen,
• einem Addierer (20), der zum Summieren der in dieser Reihe der ersten Speicherzellenmatrix akkumulierten Niveaus angeschlossen ist;
• einem ersten Analog-/Digital-Wandler (ADC) für jede Pixelspalte, dessen Ausgang mit der ersten Speicherzellenmatrix (16a) verbunden ist, wobei der erste Analog-/Digital-Wandler (ADC) zur Aufnahme der Pixelausgaben der zu dem ersten Teil der Pixelmatrix gehörigen Spalte durch einen ersten Spaltenbus angeschlossen ist;
**dadurch gekennzeichnet, dass** das Erfassungsgerät eine zweite Speicherzellenmatrix (16b) aufweist,
dass der Steuerkreis (18) weiterhin so ausgeführt ist, dass er das Schreiben und die Speicherung in einer Reihe der zweiten Speicherzellenmatrix (16b) ordnet, von Helligkeitsniveaus, die von den Reihen eines zweiten Teils der Pixelmatrix akkumuliert werden und sich auf den gleichen Bildabschnitt beziehen, wobei sich der zweite Teil von dem ersten Teil unterscheidet,
wobei der Addierer (20) zum Summieren der in dieser Reihe der ersten Speicherzellenmatrix akkumulierten Niveaus mit den in der entsprechenden Reihe der zweiten Speicherzellenmatrix akkumulierten Niveaus angeschlossen ist;
dass das Erfassungsgerät für jede Pixelspalte einen zweiten Analog-/Digital-Wandler (ADC) aufweist, dessen Ausgang mit der zweiten Speicherzellenmatrix (16b) verbunden ist, wobei der zweite Analog-/Digital-Wandler (ADC) zur Aufnahme der Pixelausgaben der zu dem zweiten Teil der Pixelmatrix gehörigen Spalte durch einen zweiten Spaltenbus angeschlossen ist, der sich von dem ersten Spaltenbus unterscheidet,
und dass der Steuerkreis weiterhin so ausgeführt ist, dass er ein gleichzeitiges Auslesen über die Busse von zwei Reihen organisiert, welche zu dem ersten bzw. zweiten Teil der Pixelmatrix gehören.

2. Zeitverzögendes und integrierendes CMOS-Bilderfassungsgerät mit:
• einer Matrix aus lichtempfindlichen Pixeln (Px), die in Reihen und Spalten geordnet sind;
• einer ersten Speicherzellenmatrix (16a); und
• einem Steuerkreis (18), der so ausgeführt ist, dass er die Speicherung in einer Reihe der ersten Speicherzellenmatrix ordnet, mit Helligkeitsniveaus, welche von den Reihen eines ersten Teils der Pixelmatrix akkumuliert werden und sich auf denselben Bildabschnitt beziehen,
• einem Addierer (20), der zum Summieren der in dieser Reihe der ersten Speicherzellenmatrix akkumulierte Niveaus angeschlossen ist,
• einem ersten Analog-/Digital-Wandler (ADC) für jede Pixelspalte, dessen Ausgang mit der ersten Speicherzellenmatrix (16a) verbunden ist, wobei der erste Analog-/Digital-Wandler (ADC) zur Aufnahme der Pixelausgaben der zu dem ersten Teil der Pixelmatrix gehörigen Spalte durch einen Spaltenbus angeschlossen ist;
**dadurch gekennzeichnet, dass** das Erfassungsgerät eine zweite Speicherzellenmatrix (16b) aufweist,
dass
der Steuerkreis (18) weiterhin so ausgeführt ist, dass er die Speicherung in einer Reihe der zweiten Speicherzellenmatrix ordnet, von Helligkeitsniveaus, die von den Reihen eines zweiten Teils der Pixelmatrix akkumuliert werden und sich auf den gleichen Bildabschnitt beziehen, wobei sich der zweite Teil von dem ersten Teil unterscheidet;
wobei der Addierer (20) zum Summieren der in dieser Reihe der ersten Speicherzellenmatrix akkumulierten Niveaus mit den in der entsprechenden Reihe der zweiten Speicherzellenmatrix akkumulierten Niveaus angeschlossen ist;
dass das Erfassungsgerät für jede Pixelspalte einen zweiten Analog-/DigitalWandler (ADC) aufweist, dessen Ausgang mit der zweiten Speicherzellenmatrix (16b) verbunden ist, wobei der zweite Analog-/Digital-Wandler (ADC) zur Aufnahme der Pixelausgaben der zu dem zweiten Teil der Pixelmatrix gehörigen Spalte durch denselben Spaltenbus verbunden ist,
und dass der Steuerkreis weiterhin so ausgeführt ist, dass er zwei aufeinanderfolgende Auslesungen über den Bus von zwei Reihen ordnet, die zu dem ersten bzw. zweiten Teil der Pixelmatrix gehören, mit einer Zeitversetzung entsprechend der von den Sampling-Toren dieser Wandler zur Auswahl der von dem entsprechenden Bus erhaltenen Pixelausgaben benötigten Zeitspanne.

3. Bilderfassungsgerät gemäß einem der Ansprüche 1 und 2, in dem die erste (16a) und zweite (16b) Speicherzellenmatrix auf beiden Seiten der Pixelmatrix (Px) angeordnet sind.

4. Bilderfässurigsgerät gemäß einem der Ansprüche 1 und 2, in dem der Steuerkreis so ausgeführt ist, dass er die Pixel derart steuert, dass die Pixel gleichzeitig belichtet und nacheinander nach Reihen in Richtung der Speicherzellenmatrizen ausgelesen werden.

5. Bilderfassungsgerät gemäß Anspruch 4, in dem der Steuerkreis zur Betätigung eines doppelten Samplings, das mit den Pixeln korreliert ist, ausgeführt ist.

6. Bilderfassungsgerät gemäß einem der Ansprüche 1 und 2, in dem jedes Pixel (Px1) einer Spalte, mit Ausnahme des letzten Pixels, Folgendes umfasst:
• ein lichtempfindliches Element (Do);
• einen Speicherknoten (C2o); sowie
• einen ersten Übertragungstransistor (TG1o), der das lichtempfindliche Element mit dem Speicherknoten verbindet;
• einen zweiten Übertragungstransistor (TG2o), der den Speicherknoten (C2o) des Pixels mit dem lichtempfindlichen Element (De) des nachfolgenden Pixels (Px2) der Spalte verbindet, und der verbunden ist, damit er gemeinsam mit dem ersten Übertragungstransistor wirksam ist.

7. Bilderfassungsgerät gemäß Anspruch 6, in dem während des Betriebs der erste und zweite Übertragungstransistor (TGo) von jedem ungeraden Pixel (Px1) in einer ersten Zeitposition einer sich wiederholenden Zeitlinie aktiviert werden, und der erste und zweite Übertragungstransistor (TGe) von jedem geraden Pixel (Px2) in einer zweiten, von der ersten Position unterschiedlichen Zeitposition der Zeitlinie aktiviert werden.

8. Steuerungsverfahren eines zeitverzögernden und integrierenden CMOS-Bilderfassungsgerätes, das die folgenden Schritte umfasst:
• Auslesen der Helligkeitsniveaus von mehreren Reihen einer Matrix aus lichtempfindlichen Pixeln (Px); und
• Akkumulieren der Helligkeitsniveaus in einer Reihe einer ersten Speicherzellenmatrix (16a), wobei diese erste Matrix (16a) mit einem ersten Analog-/Digital-Wandler (ADC) verbunden ist;
**dadurch gekennzeichnet, dass** es die folgenden Schritte umfasst:
• aufeinanderfolgendes Auslesen der Helligkeitsniveaus, in Bezug auf den gleichen Bildabschnitt, der Reihen eines ersten Teils der Pixelmatrix, um diese in einer entsprechenden Reihe der ersten Speicherzellenmatrix (16a) zu akkumulieren;
• aufeinanderfolgendes Auslesen der Helligkeitsniveaus, in Bezug auf den gleichen Bildabschnitt, der Reihen eines zweiten, von dem ersten Teil verschiedenen Teils der Pixelmatrix, um diese in einer entsprechenden Reihe einer zweiten Speicherzellenmatrix (16b) zu akkumulieren, wobei die zweite Matrix (16b) mit einem zweiten Analog-/Digital-Wandler (ADC) verbunden ist;
• gleichzeitiges Betätigen zum Auslesen der Niveaus einer zu dem ersten Teil der Pixelmatrix gehörigen Reihe und einer zu dem zweiten Teil der Pixelmatrix gehörigen Reihe, wenn der erste Analog-/Digital-Wandler mit den Pixeln des ersten Teils der Matrix durch einen ersten Bus verbunden ist und der zweite Analog-/Digital-Wandler mit den Pixeln des zweiten Teils der Matrix durch einen zweiten, von dem ersten Bus verschiedenen Bus verbunden ist, oder nahezu gleichzeitiges Betätigen mit einer Verschiebung entsprechend der Zeitspanne, die von den Sampling-Toren dieser Wandler benötigt wird, um die Pixelausgaben des ersten und zweiten Teils der Pixelmatrix auszuwählen, wenn der erste Wandler und der zweite Wandler mit den Fixeln des ersten Teils der Matrix und des zweiten Teils der Matrix durch denselben Bus verbunden sind; sowie
• Addieren (20) der in der Reihe der ersten Speicherzellenmatrix akkumulierten Niveaus zu den in der der zweiten Speicherzellenmatrix entsprechenden Reihe akkumulierten Niveaus.

9. Verfahren gemäß Anspruch 8, mit den folgenden Schritten:
• Auslesen der Schwarzpegel der Pixel vor jedem Auslesen der Helligkeitsniveau der Pixel; sowie
• Subtrahieren der Schwarzpegel von den in den Reihen der Speicherzellenmatrizen gespeicherten Niveaus.

10. Verfahren gemäß Anspruch 8, mit den folgenden Schritten:
• Festlegen einer Gruppe aus mehreren aufeinanderfolgenden Pixeln in einer Spalte der Matrix aus lichtempfindlichen Pixeln (Px);
• Belichten der Pixelgruppe;
• Zusammenfügen der Daten der Pixel der Gruppe;
• Verschieben der Pixelgruppe um ein Pixel; sowie
• Wederholen ab dem Schritt des Belichtens.

## Claims

1. An time-delay-integration CMOS image sensor comprising:
• a matrix of photosensitive pixels (Px) organized in rows and columns;
• a first memory cell matrix (16a); and
• a control circuit (18) configured to organize writing and storage of the accumulated brightness levels of the rows of a first part of the pixel matrix (Px) in a row of the first memory cell matrix (16a);
• an adder (20) connected to sum the levels accumulated in said row of the first memory cell matrix;
• a first analog-to-digital converter (ADC) for each column, the output of first converter being connected to the first memory cell matrix, the first converter being connected to receive the outputs of the pixels of the column belonging to the first part of the pixel matrix by a column bus;
**characterized in that** the sensor comprises a second memory cell matrix (16b),
**in that** the control circuit (18) is further configured to organize writing and storage of the accumulated brightness levels of the rows of a second part of the pixel matrix in a row of the second memory cell matrix; the second part being distinct of the first part;
the adder (20) being connected to sum the levels accumulated in said row of the first memory cell matrix with the levels accumulated in said corresponding row of the second memory cell matrix;
**in that** the image sensor comprises a second analog-to-digital converter (ADC) for each column, the output of the second converter being connected to the second memory cell matrix, the second converter being connected to receive the outputs of the pixels of the column belonging to the second part of the pixel matrix by a second column bus, distinct from the first column bus;
and **in that** the control circuit is further configured to organize simultaneous read on the busses of two rows respectively belonging to the first and second parts of the pixel matrix.

2. An time-delay-integration CMOS image sensor comprising:
• a matrix of photosensitive pixels (Px) organized in rows and columns;
• a first memory cell matrix (16a); and
• a control circuit (18) configured to organize writing and storage of the accumulated brightness levels of the rows of a first part of the pixel matrix (Px) in a row of the first memory cell matrix (16a);
• an adder (20) connected to sum the levels accumulated in said row of the first memory cell matrix;
• a first analog-to-digital converter (ADC) for each column, the output of first converter being connected to the first memory cell matrix, the first converter being connected to receive the outputs of the pixels of the column belonging to the first part of the pixel matrix by a column bus;
**characterized in that** the sensor comprises a second memory cell matrix (16b),
**in that** the control circuit (18) is further configured to organize writing and storage of the accumulated brightness levels of the rows of a second part of the pixel matrix in a row of the second memory cell matrix; the second part being distinct of the first part;
the adder (20) being connected to sum the levels accumulated in said row of the first memory cell matrix with the levels accumulated in said corresponding row of the second memory cell matrix;
**in that** the image sensor comprises a second analog-to-digital converter (ADC) for each column, the output of the second converter being connected to the second memory cell matrix, the second converter being connected to receive the outputs of the pixels of the column belonging to the second part of the pixel matrix by the same column bus;
and **in that** the control circuit (18) is configured to organize two successive reads on the bus of two rows respectively belonging to the first and second parts of the pixel matrix, with a delay corresponding to the period of time required by the sampling circuits of said converters to sample the outputs of the pixels received by the corresponding bus.

3. The image sensor according to claim 1 or 2, wherein the first (16a) and second (16b) memory cell matrices are arranged on each side of the pixel (Px) matrix.

4. The image sensor according to claim 1 or 2, wherein the control circuit is configured to control the pixels (Px) in such a way that the pixels are exposed simultaneously and read sequentially in rows to the memory cell matrices (16a, 16b).

5. The image sensor according to claim 5, wherein the control circuit (18) is configured to perform correlated double sampling of the pixels (Px).

6. The image sensor according to claim 1, wherein each pixel (Px1) of a column, except the last pixel, comprises:
• a photosensitive element (Do);
• a storage node (C2o); and
• a first transfer transistor (TG1o) connecting the photosensitive element to the storage node;
• a second transfer transistor (TG2o) connecting the storage node (C2o) of the pixel to the photosensitive element (De) of the next pixel (Px2) of the column, and connected to be active at the same time as the first transfer transistor.

7. The image sensor according to claim 7, wherein, in operation, the first and second transfer transistors (TGo) of each pixel of odd rank (Px1) are activated at a first time position of a recurrent line time, and the first and second transfer transistors (TGe) of each pixel of even rank (Px2) are activated at a second time position of the line time, different from the first time position.

8. A method for managing a time-delay-integration CMOS image sensor comprising the following steps:
• reading the brightness levels of several rows of a matrix of photosensitive pixels (Px); and
• accumulating the brightness levels in a row of a first memory cell matrix (16a), said first memory cell matrix being connected to a first analog-to-digital converter (ADC);
**characterized in that** it comprises the following steps:
• successively reading the brightness levels of the rows of a first part of the pixel matrix to accumulate them in a corresponding row of the first matrix (16a) of memory cells;
• successively reading the brightness levels of the rows of a second part, distinct from the first part, of the pixel matrix to accumulate them in a corresponding row of a second memory cell matrix (16b), the second memory cell matrix being connected to a second analog-to-digital converter (ADC);
• operating simultaneously to read the levels of a row belonging to the first part of the pixel matrix and of a row belonging to the second part of the pixel matrix when the first converter is connected to the pixels of the first part of the pixel matrix by a first bus and the second converter is connected to the pixels of the second part of the pixel matrix by a second bus distinct from the first bus, or almost simultaneously with a delay corresponding to the period of time required by the sampling circuits of said converters to sample the outputs of the pixels of the first and second parts of the pixel matrix when the first converter and the second converter are connected to the pixels of the first part and the second part of the pixel matrix by a same bus; and
• adding (20) the levels accumulated in the row of the first memory cell matrix to the levels accumulated in the row of the second memory cell matrix.

9. The method according to claim 9, comprising the following steps:
• reading the reference levels of the pixels before each read of the brightness levels of the pixels; and
• subtracting the reference levels from the brightness levels accumulated in the rows of the memory cell matrices.

10. the method according to claim 9, comprising the following steps:
• defining a group of several consecutive pixels in a column of the photosensitive pixel matrix (Px);
• exposing the group of pixels;
• aggregating the information of the pixels of the group;
• shifting the group of pixels by one pixel; and
• repeating from the exposure step.
